# EUROPÄISCHE PATENTSCHRIFT

(11) **EP 2 154 729 B1**
(45) Veröffentlichungstag und Bekanntmachung des Hinweises auf die Patenterteilung: **27.10.2010**
(21) Anmeldenummer: 08162384.5
(22) Anmeldetag: 14.08.2008
(51) Int. Cl.: H01L 31/042

(54) **Solarmodulanordnung und Dachanordnung**
Solar module assembly and roof assembly
Dispositif de module solaire et agencement de toit

(43) Veröffentlichungstag der Anmeldung: 17.02.2010
(73) Patentinhaber: Dudas, Mirko, 97427 Etang Salé (FR)
(72) Erfinder: Dudas, Mirko, 97427 Etang Salé (FR)
(74) Vertreter: Tomerius, Isabel

(56) Entgegenhaltungen:
- EP-A- 1 020 929
- WO-A-03/052330
- WO-A-2007/057894
- WO-A-2007/076519
- US-A- 4 771 764

## Beschreibung

Vorliegende Erfindung betrifft eine Solarmodulanordnung zur insbesondere solarthermischen und/oder photovoltaischen Energiegewinnung und eine Dachanordnung mit einer Mehrzahl an solchen Solarmodulanordnungen.

Aus dem Stand der Technik sind sowohl photovoltaische als auch solarthermische Energiegewinnungsanlagen bekannt. Beide nutzen die Sonneneinstrahlung, um entweder elektrische oder thermische Energie zu gewinnen und diese einem weiteren Verbraucher zuzuführen. Auch existieren sogenannte Kombimodule, die eine Kombination aus photovoltaischer und solarthermischer Energiegewinnung ermöglichen. Bei sämtlichen Modulen ist zur Optimierung des Wirkungsgrades eine, vom geografischen Einsatzgebiet abhängige Ausrichtung zur Sonne zwingend erforderlich.

Üblicherweise werden derartige Module auf Dächern, Flächendächern, freien Flächen oder aber auch an Fassaden derart aufgeständert, dass sie diese optimale Ausrichtung zur Sonne aufweisen. Um hier den Wirkungsgrad weiter zu optimieren sind auch solare Energiegewinnungsanlagen bekannt, die aktiv dem Sonnenverlauf nach geführt werden, um zu nahezu jeder Tageszeit eine optimale Ausrichtung zur Sonne zu gewährleisten.

Problematisch bei solchen aufgeständerten, d.h. also, je nach Verwendung auf der Süd- oder Nordhalbkugel, zur horizontalen einseitig nach Süd bzw. Nord geneigten Solarenergiegewinnungsmodulen ist jedoch die Tatsache, dass in einem Verbund angeordnete Module durch gegenseitige Abschattung im Wirkungsgrad verlieren. Zwingend notwendig sind hier ausreichende Abstand, um diese Abschattung möglichst gering zu halten.

Die DE 9010696 U1 schlägt diesbezüglich vor, um bei nebeneinander angeordneten Kollektorflächen eine bessere Ausnutzung des auf die Solarmodule auftreffenden Sonnenlichts zu erzielen, Reflektionsflächen zu verwenden, welche in der Lage sind, Anteile des einfallenden Lichts auf die Solarmodule umzulenken. Auch hier reduziert sich jedoch der pro Flächeneinheit für die Solarenergiegewinnung verwendbare Anteil, sodass der Gesamtwirkungsgrad sinkt.

Auch die DE 20 2006 020 180 U1 schlägt eine solche Lösung vor, wobei bei der Anordnung von Solarmodulen als Solardach abwechselnd gegeneinander geneigte Solar- und Retlektionstlächen verwendet werden. Diese Reilektionsflächen reflektieren auch hier Sonnenlicht auf die Solarmodule. Entsprechend ist, wie auch schon oben, der Gesamtwirkdungsgrad gering.

Das Dokument US-B-7, 211, 722 beschreibt eine Solarmodulanordnung mit verschiedenen Möglichkeiten der Geometrie der Solarmodule.

Zudem wird bei allen vorgenannten Anordnungen versucht, durch ein optimales Ausrichten zur Sonne und eine Neigung um die 25° den Ertrag der Solarmodule zu optimieren. Eine solche Konstruktion hat jedoch neben der Verschattungsproblematik auch hinsichtlich ihrer statischen Widerstandsfähigkeit Nachteile, wobei insbesondere bei starken auftretenden Windlasten solche Konstruktionen eine sehr aufwendige und kostenintensive statische Verstärkung benötigen.

Aufgabe der vorliegenden Erfindung ist es folglich eine Solarmodulanordnung bzw. eine auf solche Solarmodulanordnungen zurückgreifende Dachanordnung anzubieten, die hinsichtlich der Selbstreinigung, des Wirkungsgrades und unter Berücksichtigung der Installationskosten in Bezug auf die statische Widerstandsfähigkeit und insbesondere die statische Widerstandsfähigkeit gegen Windlasten einen verbesserten Gesatntwirkungsgrad aufweist.

Unter Gesamtwirkungsgrad wird hier insbesondere die wirtschaftliche Effizienz unter Berücksichtigung aller zuvor genannter Faktoren verstanden.

Diese Aufgabe wird durch eine Solarmodulanordnung gemäß Patentanspruch 1 und eine Dachanordnung gemäß Patentanspruch 14 gelöst.

Insbesondere wird diese Aufgabe folglich durch eine Solarmodulanordnung zur insbesondere solarthermischen und/oder photovoltaischen Energiegewinnung gelöst, umfassend eine Solarmodulanordnung zur, insbesondere solarthermischen und/oder photovoltaischen Energiegewinnung, umfassend wenigstens drei Solarmodulelemente, die in einem im wesentlichen horizontalen, flächigen Verbund derart angeordnet und jeweils zur Horizontalen H relativ zueinander geneigt sind, dass ein die Solarmodulanordnung umlaufender Seitenrand relativ zur Horizontalen H tiefer oder höher liegt als ein im wesentlichen mittlerer Zentralbereich.

Des Weiteren wird diese Aufgabe durch eine Dachanordnung mit einer Mehrzahl der vorgenannten Solarmodulanordnungen gelöst, wobei die Solarmodulanordnungen über im Wesentlichen parallel zueinander verlaufende Teilstücke der Seitenränder benachbarter Solarmodulanordnungen zu einer Dachanordnung angeordnet sind.

Unter dem Begriff Solarmodulelement wird im Umfang dieser Anmeldung jegliches Element zur solarthermischen und/oder photovoltaischen Energiegewinnung verstanden. Insofern sind davon also auch die aus dem Stand der Technik bekannten Kombimodule umfasst.

Ein wesentlicher Punkt der erfindungsgemäßen Solarmodulanordnung liegt darin, dass durch die Anordnung der einzelnen Solarmodulelemente zu einem Verbund mit einem relativ zum mittleren Zentralbereich erhöhten oder vertieften umlaufenden Seitenrandbereich Anordnungen entstehen, die bei der Berücksichtigung sämtlicher für die Ausbildung obiger Solarmodulanordnungen relevanter Faktoren einen optimalen Gesamtwirkungsgrad aufweisen. Insbesondere in tropischen Breiten hat sich dieser Effekt als besonders gravierend herausgestellt.

Bei einer Solarmodulanordnung deren umlaufender Seitenrand höher liegt als der im wesentlichen mittlere Zentralbereich ergibt sich geometrisch im wesentlichen eine Senke oder Schale deren Wirkungsgrad bezüglich ihrer geographischen Ausrichtung im wesentlichen konstant bleibt. Diesbezügliche Untersuchungen haben ergeben, dass, insbesondere in tropischen Breiten im Wesentlichen eine Wirkungsgradabweichung von 1% in Abhängigkeit der Ausrichtung, also beispielsweise zwischen einer Nord-Süd- und Ost-West-Ausrichtung vorliegt. Das bedeutet, dass bei der Installations-Planung nahezu keine Einschränkungen vorgegeben sind, so das auch bei Montageflächen, die aufgrund ihrer Lage und örtlichen Gegebenheiten bei der Verwendung von Solarmodulen nach dem Stand der Technik eine schlechte Vorraussetzung bieten, unproblematisch die erfindungsgemäßen Solarmodulanordnungen bzw. Dachanordnungen installierbar sind. Im Vergleich zu "optimal" nach Nord bzw. Süd ausgerichteten Solarmodulen ist der Wirkungsgrad nur geringfügig reduziert, wobei diese Wirkungsgradeinbußen durch die weiteren einhergehenden Vorteile der erfindungsgemäßen Solarmodulanordnung bzw. Dachanordnung bei weitem ausgeglichen werden.

So ermöglicht die erfindungsgemäße Solarmodulanordnung bzw. Dachanordnung eine nahezu vollständige Überdeckung des für die Installation zur Verfügung stehenden Raumes. Das Verhältnis von energetisch wirksamer Fläche zu genutzter Montagefläche der erfindungsgemäßen Solarmodulanordnung bzw. Dachanordnung ist praktisch eins. Während bei bisherigen Systemen beschattungsbedingte Mindestabstände zwischen den einzelnen Modulen den Flächennutzungsgrad erheblich reduzieren, wird hier erfindungsgemäß überbaute Fläche optimal ausgenutzt. Die erfindungsgemäßen Solarmodulanordnungen können also beliebig oft direkt aneinander verbaut werden, ohne die jeweils benachbarten Solarmodulanordnungen zu verschatten und damit deren Energiegewinnung zu beeinträchtigen, wobei insbesondere trotzdem noch eine verlässliche Selbstreinigung der Solarmodulelemente gewährleistet bleibt. Die Energiegewinnung ist, anders als bei herkömmlichen Systemen mit einseitig aufgeständerten Solarthermie- oder Photovoltaikmodulen unabhängig vom Abstand des Nachbarmoduls, was auch die planerischen Möglichkeiten deutlich erhöht.

Darüber hinaus ergibt sich bei der eingangs erwähnten Dachanordnung unter Verwendung der erfindungsgemäßen Solarmodulanordnungen eine statisch sehr widerstandsfähige Geometrie, deren Produktionskosten deutlich unter den Produktionskosten für die aus dem Stand der Technik bekannten Solardächern liegen. Insbesondere in geografischen Bereichen, bei denen mit hohen Winklasten zu rechnen ist, stellt eine solche, insbesondere durch eine reduzierte Neigung der Solarmodulelemente gekennzeichnete Anordnung eine optimale Konstruktion dar, da die statisch verstärkenden Maßnahmen zur Abtragung der Windlasten deutlich reduziert und so die Kosten immens gesenkt werden können. Auch hier sind die Tropen aufgrund der in diesen Gebieten sehr häufig auftretenden Zyklone, Hurrikane und Taifune ein optimales Einsatzgebiet. Auch in anderen Breiten ist jedoch dieser positive Effekt von Bedeutung.

Werden mehrere der erfindungsgemäßen Solarmodulanordnungen über Verbindung der im Wesentlichen parallel zueinander verlaufenden Teilstücke der Seitenrandbereiche benachbarter Solarmodulanordnungen zu einer Dachanordnung verbunden ergibt sich somit eine auch für große Flächen eine wirtschaftlich optimierte Konstruktion, die insbesondere aufgrund der unstetigen Oberflächenentwicklung sowohl energetisch als auch statisch entscheidende Vorteile bietet.

Je nach dem ob die Solarmodulanordnungen über relativ zum mittleren Zentralbereich tiefer oder höher liegende Seitenränder verfügen, ergibt sich eine Dachanordnung, bei der die jeweiligen Solarmodulanordnungen mit ihren im Verbund angeordneten Solarmodulelementen Dachanordnungssenken oder Dachanordnungsspitzen bilden. Auf diese Unterschiede wird im späteren noch detailliert eingegangen.

Vorzugsweise sind die Solarmodulelemente als im Wesentlichen rechtwinklige Solarmodulelemente ausgebildet und in einer ebenfalls im wesentlichen rechtwinkligen 2x2-Matrix und insbesondere in Form eines Rautendaches bzw. umgedrehten Daches angeordnet.

Unter Rautendach bzw. Rautendachanordnung wird im Zuge dieser Anmeldung die aus dem Stand der Technik für eine Dachanordnung mit einer rechtwinkligen Projektionsfläche übliche Konstruktion mit vier Giebeln verstanden, an die sich bei einer entsprechenden Rautendachanordnung dann weitere im wesentlichen gleiche "Vier-Giebeldächer" anschließen. Aus dem Stand der Technik ist für eine solche Rautendachanordnung auch der Begriff Rhombendachanordnung geläufig. Natürlich ergibt sich eine solche Rautendachanordnung nur, wenn die zu der Rautendachanordnung entsprechend angeordneten Solarmodulanordnungen ebenfalls eine rechtwinklige Projektionsfläche aufweisen. Bei einer davon abweichenden, beispielsweise dreiecksförmigen Projektionsfläche ergibt sich dagegen eine Abfolge von Pyramidendachanordnungen, wobei sämtliche entsprechend in ihrer Oberflächenentwicklung unstetigen Dachanordnung hier unter der Definition Dachanordnung mit umfasst sein sollen.

Die Bezeichnung "rechtwinklige 2x2-Matrix" bezieht sich hier im Wesentlichen auf die Projektionsfläche der resultierenden Solarmodulanordnung. Eine solche rechtwinklige Solarmodulanordnung erlaubt sehr kostengünstig die Kombination mehrerer Solarmodulanordnungen zu einer großflächigen Dachanordnung bzw. Rautendachanordnung, wobei ein entscheidender Kostenfaktor hier in der rechtwinkligen Produktion der einzelnen Solarmodulelemente liegt. Natürlich ist es stattdessen und wie bereits eingangs erwähnt auch möglich, Solarmodulanordnungen aus anders geometrisch geformten Solarmodulelementen, beispielsweise durch einen Verbund von drei dreiecksförmigen Solarmodulelementen oder aber durch die Kombination unterschiedlich geformter Solarmodulelemente zu bilden. Hier kann in Abhängigkeit des geografischen Einsatzgebietes und der zur Verfügung stehenden Montageflächen nach Bedarf optimiert werden. Natürlich ist es auch möglich anstelle durchgängiger Solarmodulelemente zur Bildung der Solarmodulanordnungen die Solarmodulelemente aus einzelnen ebenfalls in einem Verbund angeordneten einzelnen Solarmodulen auszubilden, die als Solarmodulelemente gruppiert sind. Dies hat insbesondere hinsichtlich der Produktion, des Transportes und der Belüftung der Solarmodulanordnungen Vorteile.

Bei rechtwinkligen Solarmodulelementen, die zu der erfindungsgemäßen Solarmodulanordnung verbunden werden, sind die rechtwinkligen Solarmodulelemente relativ zueinander um eine jeweils zu deren Seitenkante nicht parallele Achse und insbesondere um eine im Wesentlichen diagonal verlaufende Diagonalachse geneigt. Durch diese Neigung ergibt sich auf sehr einfache Weise eine Solarmodulanordnung mit einem relativ zum mittleren Zentralbereich erhöhten oder tiefer liegenden umlaufenden Seitenrandbereich. Die Neigung der rechtwinkligen Solarmodulelemente um eine Achse, die nicht co-achsial, sondern achsenparallel mit der Diagonalachse verläuft, also etwas versetzt dazu angeordnet ist, erlaubt die Anordnung der geneigten Solarmodulelemente in der Solarmodulanordnung, ohne das sich die Solarmodulelemente an ihrem Seitenrand berühren, wobei dadurch u.a. pro Flächeneinheit eine optimale Flächenausnutzung erzielbar ist.

Vorzugsweise beträgt der Neigungswinkel eines jeden Solarmodulelementes in Richtung des mittleren Zentralbereiches im Wesentlichen zwischen 5° und 25°, insbesondere 15° bzw. -5° und -25°, insbesondere -15°. Eine solche Neigung der einzelnen Solarmodulelemente hat in ihrem Verbund als Solarmodulanordnung und unter Berücksichtigung eventuell abzutragender Windlasten einen optimalen Gesamtwirkungsgrad. Insbesondere trägt eine solche Neigung der Selbstreinigung der Solarmodulelemente Rechnung, die einen entscheidenden Einfluss auf den Wirkungsgrad einer entsprechenden Energiegewinnungsanlage hat, da bekanntermaßen die Verschmutzung der Solarmodulelemente mit der Zeit erhebliche Wirkungsgradeinbußen mit sich bringt. Auch in geografischen Breiten, in denen mit Schnee oder Eisbefall zu rechnen ist kann so eine Reduzierung des Wirkungsgrades vermieden werden. Generell ist es in diesem Zusammenhang natürlich möglich innerhalb der Solarmodulanordnung und insbesondere in Abhängigkeit der geografischen Lage jedem einzelnen Solarmodulelement eine andere Neigung zuzuweisen und so den Energiegewinn zu optimieren. Im Zusammenspiel mit dieser variierenden Neigung ist es dann möglich, die Längen bzw. Breiten eines jeden Solarmodulelementes entsprechend anzupassen, um insbesondere Abschattung zu minimieren. Die Folge währe eine Solarmodulanordnung deren mittlerer Zentralbereich ähnlich einem "versetzten" Brennpunkt eines Parabolausschnittes "verschoben" angeordnet ist. Natürlich kann auch die gesamte Solarmodulanordnung geneigt werden, wenn dies die Randbedingungen am Montageort erlauben.

Vorzugsweise weist die Solarmodulanordnung wenigstens ein Neigungsstellelement zur Einstellung des Neigungswinkels wenigstens eines Solarmodulelementes auf. Ein solches Neigungsstellelement kann sowohl ein passives als auch ein aktives, also beispielsweise mittels eines Stellmotors justierbares Neigungsstellelement sein. Die Veränderung der Neigung bietet zum einen die Möglichkeit den Energieeintrag zu optimieren zum anderen einer anfallenden Verschmutzung oder aber auftretenden Windlasten Rechnung zu tragen. So kann bei starkem Schmutzaufkommen die Neigung erhört und so ein verstärkter Reinigungseffekt erzielt werden. Wird beispielsweise über einen bestimmten Zeitraum festgestellt, dass die Solarmodulanordnung verschmutzt, kann über eine veränderte Neigung der einzelnen Solarmodulelemente dieser Verschmutzung entgegengewirkt werden.

Vorzugsweise steht das Neigungsstellelement mit wenigstens einem Sensorelement, insbesondere einem Niederschlagssensor, einem Energieertragssensor, einem Zeitmessgeber oder einem Lichtsensor in Kommunikationsverbindung, so dass die Einstellung des Neigungswinkels in Abhängigkeit wenigstens einer detektierten Sensorinformationen regelbar ist. Das Neigungsstellelement ist dabei vorzugsweise derart ausgebildet, das der Neigungswinkel wenigstens eines Solarmodulelementes zwischen einer Produktions- bzw. Tagposition, mit einem insbesondere für die Energiegewinnung optimalen Neigungswinkel, und einer Nacht- und/oder Niederschlagsposition, mit einem größeren, insbesondere für die Selbstreinigung optimalen Neigungswinkel einstellbar ist.

Da bekannter Maßen Solarmodule nur während der Tageszeit energetisch wirksam sind, ist es möglich, die Solarmodulanordnung zwischen einer Tag- und einer Nachtposition einzustellen, wobei in der Nachtposition die Neigung erhöht wird, um die Reinigung der Module bei Niederschlägen zu verbessern. In der Tagposition kann dann die Neigung auf eine optimale Minimalneigung (in tropischen Breiten ca. 0°) reduziert werden, um den Energieertrag zu optimieren. In diesem Zusammenhang können Zeitgeber oder aber auch Licht- oder Ertragssensoren die nötige Regelung initiieren. Eine solche Regelung ist natürlich auch in Abhängigkeit auftretender Neiderschlagsphasen möglich, während derer die Solarmodulanordnung bzw. die einzelnen Solarmodulelemente in einer Niederschlagsstellung mit erhöhter Neigung eingestellt werden. Hier ist beispielsweise die Verwendung von entsprechenden Niederschlagssensoren denkbar, die eine automatische Regelung der Neigung ermöglichen. Ein solches Prinzip ist grundsätzlich auf nahezu alle anderen Arten von Solarmodulanordnungen anwendbar.

Vorzugsweise ist zwischen den im Verbund angeordneten Solarmodulelementen ein Lüftungsfreiraum und insbesondere ein Lüftungsspalt angeordnet. Dieser Lüftungsspalt trägt einer Luftzirkulation zwischen der Unterseite und der Oberseite der Solarmodulanordnung Rechnung und führt so zu einer Kühlung der einzelnen Solarmodulelemente. Diese Kühlung der Solarmodulelemente hat eine nicht zu vernachlässigende Auswirkung auf den Wirkungsgrad, wobei Solarmodulelemente mit einer geringeren Temperatur meist einen besseren Wirkungsgrad aufweisen, als aufgeheizte Solarmodulelemente. Wirkungsgradunterschiede von bis zu 5% sind hier bei einem Temperaturunterschied von 10 K beobachtet worden.

Die zwischen den einzelnen Solarmodulelementen und natürlich auch zwischen den benachbarten Solarmodulanordnungen der erfindungsgemäßen Dachanordnung vorgesehenen Lüftungsfreiräume und insbesondere Lüftungsspalte sorgen darüber hinaus dafür, dass bei auftretenden Windlasten die Druckunterschiede an der Ober- und der Unterseite der jeweiligen Module und Elemente verringert werden, was wiederum die Konstruktion entlastet und so erhebliche Kosteneinsparungen mit sich bringt.

Der Lüftungsfreiraum bzw. Lüftungsspalt kann zudem gleichzeitig als Ablauf für anfallendes Niederschlagswasser und so auch der Ableitung von Schmutzstoffen dienen.

Vorzugsweise weist dazu der Lüftungsfreiraum, insbesondere solarmodulunterseitig ein Wasserabführelement auf, dass das über die Oberseite der Solarmodulanordnung und über den Lüftungsfreiraum eingedrungene Wasser sammelt oder ableitet. Vorzugsweise ist hier darauf zu achten, dass durch die Anordnung des Wasserabführelementes die Luftzirkulation zwischen Unterseite und Oberseite der Solarmodulanordnung nicht oder nur geringfügig behindert wird. Selbstverständlich können diese Wasserabführelemente darüber hinaus auch die Funktion von Versorgungseinrichtungen, also beispielsweise zur Führung der Zu- und Ableitungen der einzelnen Solarmodulelemente übernehmen.

In diesem Zusammenhang ist es zudem möglich, solarmodulunterseitig und insbesondere im Bereich des Lüftungsfreiraumes entsprechende, insbesondere von der Wasserzuführeinrichtung oder von den einzelnen Solarmodulelementen direkt gespeiste Verdunstungsvorrichtungen anzuordnen, die durch die Verdunstung des, insbesondere während einer Niederschlagsphase gesammelten Wassers die Solarmodulanordnung kühlen. Hier können beispielsweise wasserspeichernde Fliese, Matten etc, verwendet werden, die unterseitig an der Solarmodulanordnung insbesondere von dieser beabstandet angeordnet sind. Luft, die über diese Matten streicht, wird vorzugsweise über strömungsführende Einrichtungen an der Unterseite der Solarmodulelemente entlang geführt, so dass die Module effektiv gekühlt werden. In diesem Zusammenhang kann natürlich die Verdunstungsvorrichtung auch aktiv, beispielsweise über eine Wasserzuleitung gespeist werden. Auch eine solche Vorrichtung ist grundsätzlich bei jeder Art von Solarmodul anwendbar.

Vorzugsweise weist wenigstens ein Solarmodulelement und insbesondere das in Abhängigkeit der geografischen Ausrichtung der Solarmodulanordnung von der Sonne am geringsten angestrahlte Solarmodulelement wenigstens teilweise eine Reflektorfläche, eine transparente Fläche oder dergleichen von den Flächen der anderen Solarmodulelemente abweichende Fläche auf. Die Verwendung einer Reflektorfläche kann, je nach geografischer Breite den Energieeintrag in die anderen benachbarten Solarmodulelemente erhöhen, sodass der Gesamtwirkungsgrad der Solarmodulanordnung steigt. Die Verwendung einer transparenten Fläche dagegen erlaubt die Beleuchtung des darunter liegenden Raumes.

Vorzugsweise sind die Solarmodulelemente als statisch selbsttragende Elemente ausgebildet und miteinander durch Verbindungseinrichtungen statisch tragfähig verbunden und insbesondere verschwenkbar angelenkt. Bei einer solchen Ausführung kann folglich die aus den statisch tragfähigen Solarmodulelementen gebildete Solarmodulanordnung nahezu ohne Unterkonstruktion, beispielsweise als Dachfläche montiert werden, wobei hier vorzugsweise die Verbindungseinrichtungen an den Solarmodulelementen derart komplementär ausgebildet sind, dass die Solarmodulelemente ähnlich einem Baukastenprinzip zu den Solarmodulanordnungen anordbar sind. Hier sind sämtliche aus dem Stand der Technik bekannte Verbindungseinrichtungen anwendbar. Eine solche Konstruktion gilt natürlich auch für die Anordnung der Solarmodulanordnungen zu der erfindungsgemäßen Dachanordnung.

Vorzugsweise weist die Solarmodulanordnung und/oder jedes Solarmodulelement einen insbesondere umlaufenden Tragrahmen auf, in den die Solarmodulelemente einsetzbar oder eingesetzt bzw. über den die Solarmodulelemente untereinander verbindbar sind. Ein solcher Tragrahmen ermöglicht die Anordnung mehrerer Solarmodulanordnungen zu großen Dachanordnungen bzw.- flächen und darüber hinaus den einfachen Austausch defekter Solarmodulelemente.

Grundsätzlich ist sowohl eine Ausführung mit statisch tragfähigen Solarmodulelementen, die über Verbindungselemente statisch tragfähig miteinander verbunden sind als auch die Ausführung der Solarmodulanordnung über einen insbesondere umlaufenden Tragrahmen industriell vorfertigbar, sodass auf der Baustelle die einzelnen Bauteile preiswert und schnell miteinander verbindbar sind.

Natürlich ist die erfindungsgemäße Solarmodulanordnung auch auf herkömmlichen Dachunterkonstruktionen anordbar, die dann vorzugsweise bereits die Geometrie der Solarmodulanordnungen bzw. der Dachanordnung vorgeben.

Vorzugsweise sind bei der Verwendung eines Tragrahmens die Solarmodulelemente verschwenkbar in Tragrahmen gelagert, sodass eine Neigungsanpassung einfach möglich ist.

Grundsätzlich weist die erfindungsgemäße Dachanordnung bestehend aus einer Mehrzahl an Solarmodulanordnungen eine dreidimensionale Struktur auf, die sie gegenüber großflächigen, flachen Systemen sehr viel besser stabilisiert. Gleichzeitig besitzt sie eine im Verhältnis kleine Stirnfläche, die es erleichtert, die Dachanordnung für Überdachungen in windreichen Gebieten einzusetzen, während herkömmlich aufgeständerte Systeme bei hohen Windlasten äußerst problematisch sind.

Untersuchungen haben gezeigt, dass die erfindungsgemäße Dachanordnung im Vergleich zu aus dem Stand der Technik bekannten aufgeständerten Systemen äußerst leistungsfähig ist. Bei einer simulierten Montage in tropischen Breiten und insbesondere bei einer geographischen Lage von 60° O / 15° S verzeichnet die erfindungsgemäße Solarmodulanordnung bzw. Dachanordnung bei einer Neigung der einzelnen Solarmodulelemente um 15° lediglich Einbußen im Jahresertrag in der Größenordnung von ca. 10%. Bei 10° Neigung der Module verringern sich die relativen Jahresverluste auf ca. 8%. Durch die optimale Anpassung an die Selbstreinigungsvoraussetzungen, die deutlich reduzierten statischen Anforderungen und, insbesondere bei der Verwendung als Überdachungen, durch die äußerst vorteilhafte Kostengestaltung, schlagen sich diese Verluste in der reinen Energiegewinnung jedoch nicht negativ nieder, sodass im Vergleich zu herkömmlichen Systemen trotzdem eine positive Nutzenbilanz und ein verbesserter Gesamtwirkungsgrad resultiert.

Weitere Ausführungsformen der Erfindung ergeben sich aus den Unteransprüchen.

Im Folgenden wird die Erfindung anhand von Ausführungsbeispielen beschrieben, die durch die beiliegenden Zeichnungen näher erläutert werden. Hierbei zeigen:
- Fig. 1:: eine isometrische Darstellung einer ersten Ausführungsform einer Solar- modulanordnung;
- Fig. 2:: eine Draufsicht der Solarmodulanordnung aus Fig. 1;
- Fig. 3:: einen Querschnitt durch die Solarmodulanordnung aus Fig. 1;
- Fig. 4:: einen Längsschnitt durch die Solarmodulanordnung aus Fig. 1;
- Fig. 5:: eine zweite Ausführungsform der Solarmodulanordnung;
- Fig. 6:: eine erste Ausführungsform einer erfindungsgemäßen Dachanordnung;
- Fig. 7:: eine zweite Ausführungsform der erfindungsgemäßen Dachanordnung;
- Fig. 8:: eine dritte Ausführungsform der erfindungsgemäßen Dachanordnung;
- Fig. 9:: einen Querschnitt einer vierten Ausführungsform der erfindungsgemäßen Dachanordnung; und
- Fig. 10:: einen Längsschnitt der Dachanordnung aus Fig. 9.

Im Folgenden werde für gleiche und gleich wirkende Bauteile dieselben Bezugsziffern verwendet, wobei bisweilen Hochindizes ihre Verwendung finden.

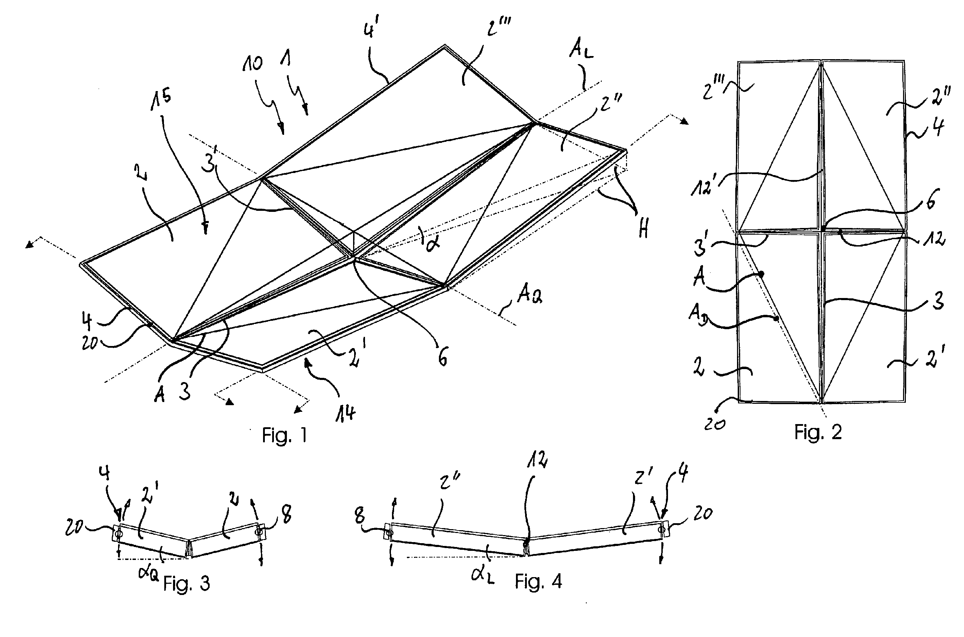

Fig. 1 zeigt eine isometrische Darstellung einer ersten Ausführungsform der erfindungsgemäßen Solarmodulanordnung 1. Diese umfasst vier Solarmodulelemente 2, die in einem im Wesentlichen horizontalen, flächigen Verbund derart angeordnet und jeweils zur Horizontalen H relativ zueinander um einen Neigungswinkel α geneigt sind, dass ein die Solarmodulanordnung 1 umlaufender Seitenrand 4 relativ zur Horizontalen H tiefer oder höher liegt, als ein im Wesentlichen mittlerer Zentralbereich 6.

Bei den folgenden Erläuterungen wird nun auf die Fig. 1 bis 4 Bezug genommen. Die Solarmodulanordnung 1 umfasst wie erwähnt bei dieser Ausführungsform vier Solarmodulelemente 2, die allesamt als rechtwinklige Solarmodulelemente 2 ausgebildet sind. Zur Bildung der Solarmodulanordnung 1 sind diese Solarmodulelemente 2 über ihre Seitenränder 3 in einer 2x2-Matrix angeordnet. Insofern ist die resultierende Solarmodulanordnung 1 ebenfalls zumindest in ihrer Projektionsfläche zur Ebene H rechtwinklig.

Jedes einzelne Solarmodulelement 2 ist dabei um eine Achse A in Richtung des mittleren Zentralbereiches 6 geneigt, so dass sich für die Solarmodulanordnung 1 die Form eines umgekehrten Rautendaches 10 ergibt.

Die jeweilige Achse A, um die die Solarmodulelemente 2 geneigt werden, verläuft nicht parallel zu den Seitenrändern 4 und bei dieser Ausführungsform zur jeweiligen Diagonalachse A_{D} achsenparallel und in Richtung des mittleren Zentralbereiches 6 versetzt.

Der Neigungswinkel α mit dem die jeweiligen Solarmodulelemente 2 relativ zur Horizontalen H in Richtung des mittleren Zentralbereiches 6 geneigt sind, beträgt bei dieser Ausführungsform im Wesentlichen 15°. Eine solche Neigung hat sich hinsichtlich des Gesamtwirkungsgrades, u.a. aufgrund des Selbstreinigungseffektes und der der statischen Widerstandsfähigkeit der Solarmodulanordnung 1, als sehr positiv herausgestellt.

Aufgrund der zweiaxialen Neigung, nämlich um eine Achse parallel zur Querachse A_{Q} und um eine Achse parallel zur Längsachse A_{L} ergeben sich für die Gesamtneigungswinkel α eines jeden Solarmodulelementes 2 die in den Fig. 3 und 4 dargestellten Neigungswinkel α_{Q} und α_{L}.

Um beim Betrieb der Solarmodulanordnung 1 eine Optimierung hinsichtlich des Wirkungsgrades, der Selbstreinigung oder aber eine Reduktion der abzutragenden Windlasten zu erzielen, ist es möglich, über die in den Fig. 3 und 4 dargestellten Neigungsstellelemente 8 die einzelnen Solarmodulelemente 2 in ihren Neigungen α, α_{Q} und α_{L} anzupassen. Stellt sich beispielsweise bei einem Ausgangswinkel α von 10° heraus, dass die Solarmodulanordnung schnell zum Verschmutzen neigt, kann durch eine Aktivierung der Neigungsstellelemente 8 der Winkel α vergrößert und somit die Selbstreinigung verbessert werden. Die erwähnten Neigungsstellelemente 8 können dabei sowohl aktive, also beispielsweise über eine kabelgebundene Stelleinrichtung aktivierbare Neigungsstellelemente oder aber auch manuell über Schraubverbindungen arretierbare Elemente sein.

Zwischen den einzelnen in der Solarmodulanordnung 1 angeordneten Solarmodulelementen 2 sind, wie insbesondere in Fig. 2 deutlich erkennbar Lüftungsfreiräume 12 angeordnet, die hier aufgrund geometrischer Randbedingungen und resultierend aus der Neigung der jeweiligen Solarmodulelemente 2 von den Seitenrändern 4 zum mittleren Zentralbereich 6 zunehmend ausgebildet sind. Diese Lüftungsfreiräume 12 erfüllen mehrere Funktionen. So erlauben sie eine Luftzirkulation zwischen der Unterseite 14 und der Oberseite 15 der Solarmodulanordnung 1, so dass die einzelnen Solarmodulelemente 2 gekühlt werden. Dies trägt zu einer Verbesserung des energetischen Wirkungsgrades bei.

Darüber hinaus reduzieren natürlich die Lüftungsfreiräume 12 die auf die Solarmodulanordnung 1 wirkende Winddrucklasten, so dass hier an die Konstruktion geringere statische Anforderungen gestellt werden können.

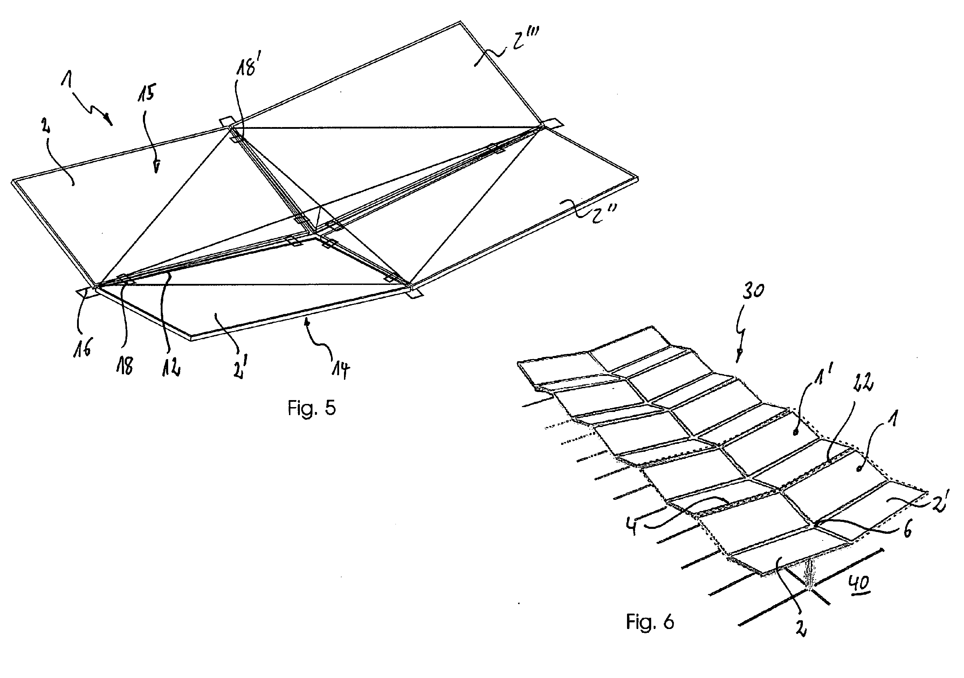

Schließlich ermöglichen die Lüftungsfreiräume 12 auch das Abführen von Niederschlagswasser, dass auf die Oberseite 15 der Solarmodulanordnung 1 bzw. der Solarmodulelemente 2 auftrifft. Aufgrund der Neigung der Solarmodulelemente läuft dieses Niederschlagswasser in die zu diesem Zweck vorteilhafterweise in Richtung des Zentralbereiches 6 zunehmenden Lüftungsfreiräume 12 ein, wo es dann entweder über entsprechende Wasserführungseinrichtungen 16 (siehe Fig. 5) abgeleitet oder aber einfach von der Solarmodulanordnung 1 auf den darunter liegenden Boden abtropft. Natürlich ist es in diesem Zusammenhang auch möglich die Übergangsbereiche zwischen den einzelnen Solarmodulelementen 2 fluiddicht zu versiegeln und dann nur im mittleren Zentralbereich 6 eine entsprechende Wasserabführeinrichtung anzuordnen.

Zur statischen Stabilisierung der Solarmodulanordnung 1 weist diese einen Tragrahmen 20 auf, der der Geometrie der Seitenränder 4 folgend die Solarmodulanordnung 1 vollständig umläuft. In diesen Tragrahmen 20 sind die Solarmodulelemente 2 eingepasst und insbesondere verschwenkbar angelenkt, so dass deren Neigung über die Neigungsstellelemente 8 veränderbar ist. Natürlich ist es in diesem Zusammenhang auch möglich anstelle eines Tragrahmens 20 aus dem Stand der Technik bekannte Unterkonstruktionen zu verwenden, auf denen die Solarmodulelemente 2 aufgelagert werden.

Fig. 5 zeigt eine zweite Ausführungsform der Solarmodulanordnung 1, die sich von der zuvor beschriebenen Ausführungsform gemäß den Fig. 1 bis 4 im Wesentlichen durch die statische Ausbildung der Solarmodulelemente 2 unterscheidet. Diese sind hier als statisch selbsttragende Elemente 2 ausgebildet und über ebenfalls statisch tragfähige Verbindungseinrichtungen 18 zur Solarmodulanordnung 1 verbunden. Eine solche Konstruktion kann folglich mit sehr geringem Materialaufwand für die Unterkonstruktion auf entsprechenden Lagerflächen aufgelagert werden, wobei insbesondere die Montage durch die Selbsttragfähigkeit der einzelnen Solarmodulelemente 2 deutliche vereinfacht wird.

An der Unterseite 14 der hier gezeigten Solarmodulanordnung 1 ist darüber hinaus das Wasserabführelement 16 angeordnet, das sich solarmodulunterseitig 14 entlang der Lüftungsfreiräume 12 zwischen den einzelnen Solarmodulelementen 2 erstreckt. Das Wasserabführelement 16 dient wie gesagt der Abführung von Niederschlagswasser, das von der Oberseite 15 der Solarmodulelemente 2 zugeführt wird. Um die zuvor beschriebene Luftzirkulation zwischen der Unterseite 14 und der Oberseite 15 nicht zu behindern, ist dabei das Wasserabführelement 16 von der Unterseite 14 der Solarmodulanordnung 1 beabstandet.

Fig. 6 zeigt eine erste Ausführungsform der erfindungsgemäßen Dachanordnung 30, bei der insgesamt fünf Solarmodulanordnungen 1 gemäß Fig. 5 zu einer Rautendachanordnung verbaut sind. Die Solarmodulanordnungen 1 sind dabei an im Wesentlichen parallel zueinander verlaufenden Teilstücken 22 der Seitenränder 4 der benachbarten Solarmodulanordnungen 1 angeordnet, so dass sich eine in ihrer Flächenentwicklung unstetige, im Wesentlichen im "Zick-Zack" verlaufende Rautendachanordnung ergibt. Diese weist aufgrund der jeweils zum mittleren Zentralbereich 6 geneigten Solarmodulelemente 2 einen von der geographischen Ausrichtung im Wesentlichen unabhängigen Wirkungsgrad auf. Darüber hinaus ermöglicht die erfindungsgemäße Montage der Solarmodulanordnungen 1 zu einer Rautendachanordnung 30, wie in Fig. 6 erkennbar, eine optimale Flächenausnutzung der zu überbauenden Fläche 40.

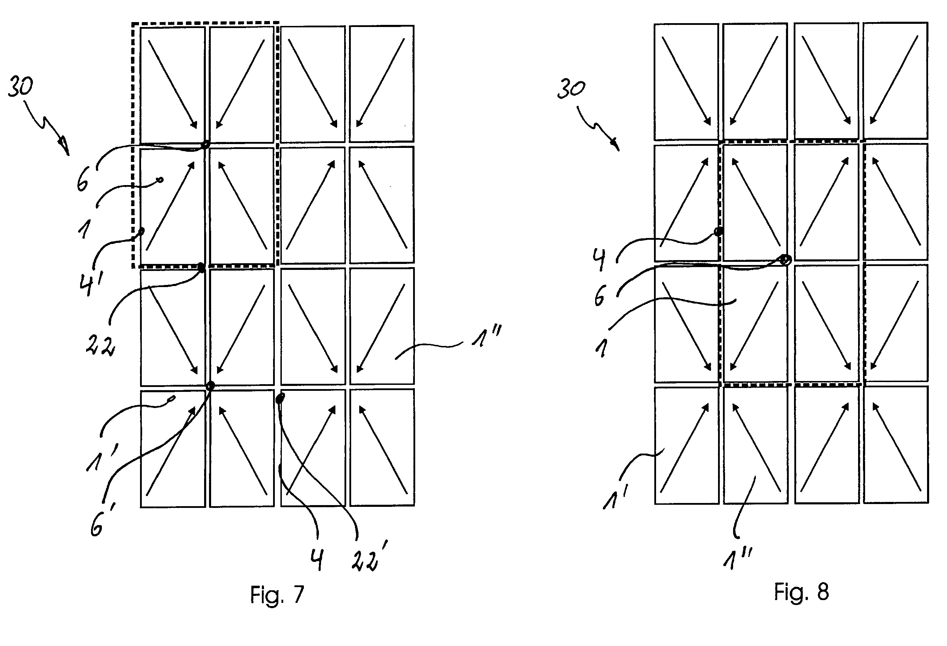

Die Fig. 7 und 8 zeigen schematisch zwei weitere Ausführungsformen der Dachanordnung 30, die sich im Wesentlichen durch die Ausführung der Solarmodulanordnungen 1 unterscheiden.

So wird die Dachanordnung 30 aus Fig. 7 durch vier Solarmodulanordnungen 1 gebildet, die an benachbarten Teilstücken 22 der Randbereiche 4 angeordnet sind. Die hier verwendeten Solarmodulanordnungen 1 sind dabei derart ausgebildet, dass der die Solarmodulanordnung 1 umlaufende Seitenrand 4 relativ zur Horizontalen H (siehe Fig. 1) höher liegt als der im Wesentlichen mittlere Zentralbereich 6. Die jeweilige Neigung der Solarmodulelemente 2 ist bei beiden Fig. 7 und 8 durch Pfeile dargestellt, wobei die Pfeilspitze jeweils die Gefällerichtung kennzeichnet.

Bei der in Fig. 8 dargestellten Ausführungsform wird die Dachanordnung 30 durch eine Solarmodulanordnung 1 gebildet, deren Seitenrand 4 relativ zur Horizontalen H (siehe Fig. 1) tiefer liegt als der im Wesentlichen mittlere Zentralbereich 6. An diese hier mittig dargestellte Solarmodulanordnung 1 schließen dann jeweils wieder weitere entsprechend ausgebildete Solarmodulanordnungen 1', 1" an, die hier nur teilweise dargestellt sind. Im Resultat ergibt sich folglich für Geometrie der Rautendachanordnung bei den Ausführungsformen aus Fig. 7 und 8 Identität, wobei die Konstruktion jeweils nur auf unterschiedlich ausgebildete Solarmodulanordnungen 1 zurückgreift.

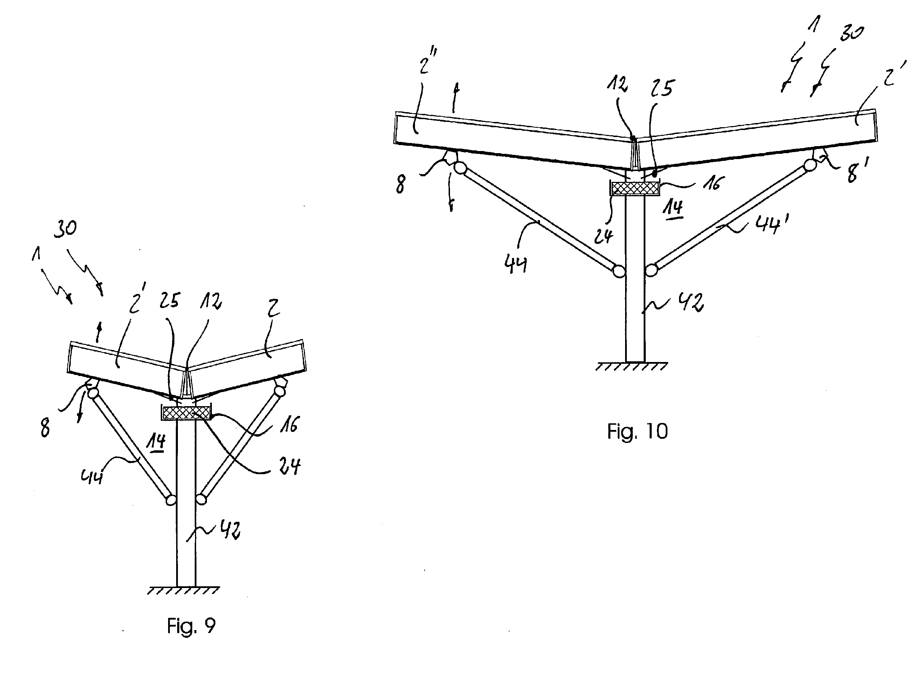

Die Fig. 9 und 10 zeigen eine vierte Ausführungsform der erfindungsgemäßen Dachanordnung 30 im Quer- bzw. Längsschnitt. Solarmodulunterseitig 14 ist hier ebenfalls ein Wasserabführelement 16 angeordnet, in das über den Lüftungsfreiraum 12 Niederschlagswasser einlaufen kann. Innerhalb des Wasserabführelementes ist eine Verdunstungseinrichtung 24 angeordnet, die hier als ein wasserspeicherndes Flies ausgebildet ist. Das im Flies gespeicherte Wasser verdunstet nach einer Niederschlagsphase sukzessive, wodurch der Luft, die von der Unterseite 14 zur Oberseite 15 strömt Energie entzogen wird, was zu einer Kühlung der Solarmodulanordnung 1 führt. Um diesen gekühlten Luftstrom zu kanalisieren sind oberhalb der Verdunstungseinrichtung 24 strömungsführende Elemente 25 angeordnet.

Die Neigungseinstellung der einzelnen Solarmodulelemente 2 erfolgt hier ebenfalls über Neigungsstellelemente 8, die allerdings bei dieser Ausführungsform an entsprechend an einer Mittelstütze 42 angeschlagenen Schrägstützen 44 angeordnet sind. Diese Stützen 44 dienen gleichzeitig als Tragstützen für die auskragenden Solarmodulelemente 2.

### Bezugszeichen

- 1: Solarmodulanordnung
- 2: Solarmodulelement
- 3: Randbereich
- 4: Seitenrand
- 6: mittlerer Zentralbereich
- 8: Neigungsstellelement
- 10: Rautendach
- 12: Lüftungsfreiraum, Lüftungsspalt
- 14: Unterseite
- 15: Oberseite
- 16: Wasserabführelement
- 18: Verbindungseinrichtung
- 20: Tragrahmen
- 22: Teilstück
- 24: Verdunstungsvorrichtung
- 25: strömungsführendes Element
- 30: Dach- bzw. Rautendachanordnung
- 40: Fläche
- A: Achse
- A_{D}: Diagonalachse
- A_{L}: Längsachse
- A_{Q}: Querachse
- α: Neigung
- α_{Q}: Querneigung
- α_{L}: Längsneigung
- H: Horizontale

## Patentansprüche

1. Solarmodulanordnung zur insbesondere solarthermischen und/oder photovoltaischen Energiegewinnung, umfassend
wenigstens drei Solarmodulelemente (2), die im Betriebszustand in einem im wesentlichen horizontalen, flächigen Verbund derart angeordnet und jeweils zur Horizontalen H relativ zueinander geneigt sind, **dadurch gekennzeichnet dass** der die Solarmodulanordnung (1) umlaufende Seitenrand (4) relativ zur Horizontalen H tiefer oder höher liegt als ein von den wenigstens drei Solarmodulelementen (2) gebildeter mittlerer Zentralbereich (6).

2. Solarmodulanordnung nach Anspruch 1,
**dadurch gekennzeichnet, dass**
vier im Wesentlichen rechtwinklige Solarmodulelemente (2) in einer im Wesentlichen rechtwinkligen 2x2-Matrix und insbesondere in Form eines Rautendaches (10) bzw. umgekehrten Rautendaches (10) angeordnet sind.

3. Solarmodulanordnung nach einem der vorhergehenden Ansprüche, insbesondere nach Anspruch 2,
**dadurch gekennzeichnet, dass**
die rechtwinkligen Solarmodulelemente (2) relativ zueinander um eine jeweils zu deren Seitenkanten (4) nicht-parallele Achse (A) und insbesondere um eine im Wesentlichen diagonal verlaufende Diagonalachse (A_{D}) oder einer dazu achsenparallel versetzten Achse (A) geneigt sind.

4. Solarmodulanordnung nach einem der vorhergehenden Ansprüche,
**dadurch gekennzeichnet, dass**
die Neigungswinkel (α) der Solarmodulelemente (2) in Richtung des mittleren Zentralbereiches (6) im Wesentlichen zwischen 5° und 25°, insbesondere 15° bzw. -5° und -25°, insbesondere -15° betragen.

5. Solarmodulanordnung nach einem der vorhergehenden Ansprüche, insbesondere Anspruch 4,
**gekennzeichnet durch**
wenigstens ein Neigungsstellelement (8), zur Einstellung des Neigungswinkels (α) wenigstens eines Solarmodulelementes (2) und/oder der Solarmodulanordnung (1).

6. Solarmodulanordnung nach einem der vorhergehenden Ansprüche, insbesondere nach Anspruch 5,
**dadurch gekennzeichnet, dass**
das Neigungsstellelement (8) mit wenigstens einem Sensorelement, insbesondere einem Niederschlagssensor, einem Energieertragssensor, einem Zeitmessgeber oder einem Lichtsensor in Kommunikationsverbindung steht, so dass die Einstellung des Neigungswinkels (α) in Abhängigkeit wenigstens einer detektierten Sensorinformation regelbar ist.

7. Solarmodulanordnung nach einem der vorhergehenden Ansprüche, insbesondere nach einem der Ansprüche 5 oder 6,
**dadurch gekennzeichnet, dass**
das Neigungsstellelement (8) derart ausgebildet ist, das der Neigungswinkel (α) wenigstens eines Solarmodulelementes (2) zwischen einer Produktions- bzw. Tagposition, mit einem insbesondere für die Energiegewinnung optimalen Neigungswinkel (α), und einer Nacht- und/oder Niederschlagsposition, mit einem größeren, insbesondere für die Selbstreinigung optimalen Neigungswinkel (α) einstellbar ist.

8. Solarmodulanordnung nach einem der vorhergehenden Ansprüche,
**dadurch gekennzeichnet, dass**
zwischen den im Verbund angeordneten Solarmodulelementen (2) ein Lüftungsfreiraum (12) und insbesondere ein Lüftungsspalt angeordnet ist.

9. Solarmodulanordnung nach einem der vorhergehenden Ansprüche, insbesondere nach Anspruch 8,
**dadurch gekennzeichnet, dass**
im Bereich des Lüftungsfreiraums (12) und insbesondere solarmodulunterseitig (14) ein Wasserabführelement (16) angeordnet ist.

10. Solarmodulanordnung nach einem der vorhergehenden Ansprüche, insbesondere nach Anspruch 8 oder 9,
**dadurch gekennzeichnet, dass**
insbesondere solarmodulunterseitig (14) im Bereich des Lüftungsfreiraums (12), eine Verdunstungsvorrichtung (24) vorgesehen ist, die insbesondere vom Wasserabführelement (16) gespeist wird.

11. Solarmodulanordnung nach einem der vorhergehenden Ansprüche,
**dadurch gekennzeichnet, dass**
wenigstens ein Solarmodulelement (2) und insbesondere das in Abhängigkeit der geographischen Ausrichtung der Solarmodulanordnung (1) von der Sonne am geringsten angestrahlte Solarmodulelement wenigstens teilweise eine Reflektorfläche, eine transparente Fläche oder dergleichen von den Flächen der anderen Solarmodulelemente abweichende Fläche aufweist.

12. Solarmodulanordnung nach einem der vorhergehenden Ansprüche,
**dadurch gekennzeichnet, dass**
die Solarmodulelemente (2) als statisch selbstragende Elemente ausgebildet und miteinander durch Verbindungseinrichtungen (18) statisch tragfähig verbunden und insbesondere verschwenkbar angelenkt sind.

13. Solarmodulanordnung nach einem der vorhergehenden Ansprüche,
**dadurch gekennzeichnet, dass**
die Solarmodulanordnung (1) und/oder die Solarmodulelemente (2) einen insbesondere umlaufenden Tragrahmen (20) aufweisen, in den die Solarmodulelemente (2) einsetzbar oder eingesetzt sind bzw. über den die Solarmodulelemente (2) zur Solarmodulanordnung (1) verbindbar sind.

14. Dachanordnung mit einer Mehrzahl an Solarmodulanordnungen (1) gemäß einem der vorhergehenden Ansprüche, wobei die Solarmodulanordnungen (1) an im Wesentlichen parallel zueinander verlaufenden Teilstücken (22) der Seitenränder (4) benachbarter Solarmodulanordnungen (1) zu einer Dachanordnung und insbesondere einer Rautendachanordnung (30) angeordnet sind.

## Claims

1. A solar module assembly, in particular for solar thermal and/or photovoltaic power generation, comprising
at least three solar module elements (2), which, in the operating state, are situated in an essentially horizontal, planar compound and are each inclined relative to one another to the horizontal H, **characterized in that**
the side edge (4) peripheral to the solar module assembly (1) is lower or higher relative to the horizontal H than a middle central area (6) formed by the at least three solar module elements (2).

2. The solar module assembly according to Claim 1,
**characterized in that**
four essentially rectangular solar module elements (2) are situated in an essentially rectangular 2 x 2 matrix and in particular in the form of a helm roof (10) or inverted helm roof (10).

3. The solar module assembly according to one of the preceding claims, in particular according to Claim 2,
**characterized in that**
the rectangular solar module elements (2) are inclined relative to one another around an axis (A) nonparallel to each of their side edges (4), and in particular around a substantially diagonally running diagonal axis (A_{D}) or an axis (A) offset axially-parallel thereto.

4. The solar module assembly according to one of the preceding claims,
**characterized in that**
the angles of inclination (α) of the solar module elements (2) in the direction of the middle central area (6) are essentially between 5° and 25°, in particular 15°, or -5° and -25°, in particular -15°.

5. The solar module assembly according to one of the preceding claims, in particular Claim 4, **characterized by**
at least one inclination control element (8), for setting the angle of inclination (α) of at least one solar module element (2) and/or the solar module assembly (1).

6. The solar module assembly according to one of the preceding claims, in particular according to Claim 5,
**characterized in that**
the inclination control element (8) has a communication connection to at least one sensor element, in particular a precipitation sensor, an energy amount sensor, a timer, or a light sensor, so that the setting of the angle of inclination (α) can be regulated as a function of at least one item of detected sensor information.

7. The solar module assembly according to one of the preceding claims, in particular according to one of Claims 5 or 6,
**characterized in that**
the inclination control element (8) is implemented in such a manner that the angle of inclination (α) of at least one solar module element (2) is settable between a production or day position, having an angle of inclination (α), which is optimum for power generation in particular, and a night and/or precipitation position, having a greater angle of inclination (α), which is optimal for self-cleaning in particular.

8. The solar module assembly according to one of the preceding claims,
**characterized in that**
a ventilation free space (12) and in particular a ventilation gap is situated between the solar module elements (2) situated in the compound.

9. The solar module assembly according to one of the preceding claims, in particular according to Claim 8,
**characterized in that**
a water drain element (16) is situated in the area of the ventilation free space (12), and in particular on the solar module lower side (14).

10. The solar module assembly according to one of the preceding claims, in particular according to Claim 8 or 9,
**characterized in that**
an evaporation device (24) is provided in particular on the solar module lower side (14) in the area of the ventilation free space (12), which is particularly supplied by the water drain element (16).

11. The solar module assembly according to one of the preceding claims,
**characterized in that**
at least one solar module element (2), and in particular the solar module element receiving the least solar radiation as a function of the geographical orientation of the solar module assembly (1), at least partially has a reflector surface, a transparent surface, or a similar surface deviating from the surfaces of the other solar module elements.

12. The solar module assembly according to one of the preceding claims,
**characterized in that**
the solar module element (2) are implemented as static self-supporting elements, and are connected to one another by connection units (18) so they are statically loadbearing and in particular are linked so they are pivotable.

13. The solar module assembly according to one of the preceding claims,
**characterized in that**
the solar module assembly (1) and/or the solar module elements (2) have a particularly peripheral support frame (20), in which the solar module elements (2) are insertable or inserted and/or via which the solar module elements (2) are connectable to the solar module assembly (1).

14. A roof assembly having a plurality of solar module assemblies (1) according to one of the preceding claims, wherein the solar module assemblies (1) are situated on parts (22) of the side edges (4) of adjacent solar module assemblies (1), which run substantially parallel to one another, to form a roof assembly and in particular a helm roof assembly (30).

## Revendications

1. Disposition de modules solaires, pour la production d'énergie en particulier thermique solaire et/ou photovoltaïque, comprenant au moins trois éléments de module solaire (2) qui sont disposés, dans l'état de fonctionnement, selon un assemblage plat sensiblement horizontal et inclinés les uns par rapport aux autres par rapport à l'horizontale H,
**caractérisé en ce**
**que** le bord latéral (4) entourant la disposition de modules solaires (1) est plus bas ou plus haut par rapport à l'horizontale H qu'une partie centrale médiane (6) formée par au moins trois éléments de module solaire (2).

2. Disposition de modules solaires selon la revendication 1,
**caractérisée en ce**
**que** quatre éléments de module solaire (2) sensiblement perpendiculaires sont disposés selon un quadrillage 2x2 sensiblement perpendiculaire et en particulier sous la forme d'une toiture rhomboïdale (10) ou d'une toiture rhomboïdale inversée (10).

3. Disposition de modules solaires selon l'une des revendications précédentes, en particulier selon la revendication 2,
**caractérisée en ce**
**que** les éléments de module solaire (2) perpendiculaires sont inclinés les uns par rapport aux autres autour d'un axe (A) non parallèle à leurs bords latéraux (4) et en particulier autour d'un axe diagonal (A_{D}) sensiblement diagonal ou d'un axe (A) décalé parallèlement à celui-ci.

4. Disposition de modules solaires selon l'une des revendications précédentes,
**caractérisée en ce**
**que** les angles d'inclinaison (α) des éléments de module solaire (2) en direction de la zone centrale médiane (6) sont sensiblement compris entre 5° et 25°, en particulier entre 15° ou -5° et -25°, en particulier de -15°.

5. Disposition de modules solaires selon l'une des revendications précédentes, en particulier de la revendication 4,
**caractérisée en ce**
**qu'**elle comporte au moins un élément de réglage de l'inclinaison (8) destiné à régler l'angle d'inclinaison (α) d'au moins un élément de module solaire (2) et/ou de la disposition de modules solaires (1).

6. Disposition de modules solaires selon l'une des revendications précédentes, en particulier selon la revendication 5,
**caractérisée en ce**
**que** l'élément de réglage de l'inclinaison (8) est en communication avec au moins un élément de capteur, en particulier un capteur de précipitations, un capteur de rendement énergétique, un chronomètre ou un capteur de lumière, de telle façon que le réglage de l'angle d'inclinaison (α) soit possible en fonction d'au moins une information détectée par le capteur.

7. Disposition de modules solaires selon l'une des revendications précédentes, en particulier selon l'une des revendications 5 ou 6,
**caractérisée en ce**
**que** l'élément de réglage de l'inclinaison (8) est conformé de telle façon que l'angle d'inclinaison (α) d'au moins un élément de module solaire (2) puisse être réglé entre une position de production ou diurne, avec un angle d'inclinaison (α) optimal en particulier pour la production d'énergie, et une position nocturne ou de mauvais temps avec un angle d'inclinaison (α) plus grand, optimal en particulier pour l'auto-nettoyage.

8. Disposition de modules solaires selon l'une des revendications précédentes,
**caractérisée en ce**
**qu'**il est prévu entre les éléments de module solaire (2) disposés dans un assemblage un espace d'aération libre (12) et en particulier une fente d'aération.

9. Disposition de modules solaires selon l'une des revendications précédentes, en particulier selon la revendication 8,
**caractérisée en ce**
**qu'**il est prévu au niveau de l'espace d'aération libre (12), en particulier sur la face inférieure des modules solaires (14), un élément d'évacuation de l'eau (16).

10. Disposition de modules solaires selon l'une des revendications précédentes, en particulier selon la revendication 8 ou 9,
**caractérisée en ce**
**qu'**il est prévu, en particulier sur la face inférieure des modules solaires (14) au niveau de l'espace
d'aération libre (12), un dispositif d'évaporation (24) qui est alimenté en particulier par l'élément d'évacuation de l'eau (16).

11. Disposition de modules solaires selon l'une des revendications précédentes,
**caractérisée en ce**
**qu'**au moins un élément de module solaire (2) et en particulier l'élément de module solaire le moins exposé au soleil en fonction de l'orientation géographique de la disposition de modules solaires (1) présente au moins partiellement une surface réfléchissante, une surface transparente ou une surface similaire différente des surfaces des autres éléments de module solaire.

12. Disposition de modules solaires selon l'une des revendications précédentes,
**caractérisée en ce**
**que** les éléments de module solaire (2) sont conformés comme des éléments autoportants statiques et reliés entre eux de façon portante statique par des dispositifs d'assemblage (18) et en particulier articulés de façon pivotante.

13. Disposition de modules solaires selon l'une des revendications précédentes,
**caractérisée en ce**
**que** la disposition de modules solaires (1) et/ou les éléments de modules solaires (2) présentent un cadre de support (20) en particulier circonférentiel, dans lequel les éléments de module solaire (2) peuvent être ou sont insérés ou par lequel les éléments de module solaire (2) peuvent être assemblés pour former la disposition de modules solaires (1).

14. Disposition de toit avec une pluralité de dispositions de modules solaires (1) selon l'une des revendications précédentes, dans laquelle les dispositions de modules solaires (1) sont disposées sur des parties (22) sensiblement parallèles les unes aux autres des bords latéraux (4) de dispositions de modules solaires (1) voisines pour former une disposition de toiture et en particulier une disposition de toiture rhomboïdale (30).
